# EUROPEAN PATENT APPLICATION

(11) **EP 4 442 552 A1**
(43) Date of publication of application: **09.10.2024**
(21) Application number: 24167527.1
(22) Date of filing: 28.03.2024
(51) Int. Cl.: B63B 21/50, B63B 21/00, F16F 15/00, F16F 15/03

(54) **ANCHORING DEVICE**

(30) Priority: 30.03.2023 IT 202300006234
(71) Applicant: Seares S.r.l., 56124 Pisa (IT)
(72) Inventor: TAVIANI, Corrado, Fucecchio (IT); SGAMBELLURI, Nicola, PISA (IT); CUCE', Giorgio, Livorno (IT)
(74) Representative: Lunati & Mazzoni S.r.L.

(57) **Abstract**

A device (1) for anchoring a floating body (1a) is provided comprising an apparatus (2) for constraining the floating body (1a) to a ground fixing structure (1b) comprising a first attachment (21) to the floating body (1a), a second attachment (22) to the ground fixing structure (1b); the attachments (21, 22) defining a mutual motion thereof along a motion axis (2a); the constraint apparatus (2) further comprises a shock absorber (23) configured to command a variation in the damping of the mutual motion between the attachments (21, 22); the anchoring device (1) also comprises a member (3) for detecting a wave; and a control unit (4) configured to identify the propagating function of the wave detected by the detection member (3) and to command to each constraint apparatus (2) a variation in the damping as a function of the propagating function, of the physical-mechanical features of the floating body (1a) and of the position of the motion axis (2a).

## Description

The present invention relates to an anchoring device of the type specified in the preamble of the first claim.

In particular, it relates to a device configured to constrain a floating body (identifiable for example in a boat, a platform or a floating pier) to a ground fixing structure (for example the seabed or the natural or artificial quay of a port).

As it is known an anchoring device identifies all instruments required to constrain one or more floating bodies (usually a vessel, a boat and/or a ship) to the seabed or to the lake or river bottom, etc., by making it safe to stand in spite of the wind, the currents and the sea state.

A particular case of anchoring is mooring (in this document one relates indifferently to "mooring" and "anchoring" univocally with the term "anchoring"). It is required to make one or more floating bodies firmly stationary to a ground fixing structure (generally the wharf of a port).

Depending upon the position of the floating body with respect to the fixing structure, several types of mooring can be distinguished. In detail usually mooring takes place alongside in which the floating body is arranged parallelly to the fixing structure (identifiable in the quay) and fastened thereto usually with several bow and stern or stern/bow cables (called hawsers), in which the floating body is perpendicularly to the quay, having the bow/stern usually constrained to a dead body or catenary, whereas the stern/bow is secured to ground bitts by cables.

A second anchoring case is the one of the floating platforms which distinguish from the fixed platforms which are constrained to the seabed so as to discharge their own weight on the seabed to carrier elements such as legs made of cement or steel. The floating platforms (also called floats) can be anchored to the seabed and then to the ground fixing structure through chains and/or cable ties inserted in the seabed by means of long poles.

At last, between cables and floating body shock absorbers are placed (usually called docking shock absorbers) having the function of reducing to the minimum the impacts and the flowing back motion to which the floating body is subjected due to the wave motion.

These shock absorbers are simple metal springs stuck together.

The described known art comprises some important drawbacks.

A first drawback lies in the fact that the known anchoring devices are selected in the initial phase and often they do not correspond to the real needs of the floating body. For example, the anchoring and in detail the mooring of a boat is performed at time of docking with the sea under determined conditions. During the anchoring time, the sea conditions can vary so as to make the selected anchoring no more suitable to avoid damages to the floating body.

This problem results to be particular evident in case of cross winds which generate extremely and difficult conditions for a floating body in anchorage.

Such difficulty is accentuated by the fact that in a port the exposure of the floating bodies to bad weather and in particular to the sea/wind conditions varies also depending upon the position of the floating body in the port.

Such aspect is particularly evident even in case of floating platforms which, since they are used to perform work such as extractions or analyses, have to guarantee a high stability. Therefore, the platforms are anchored to the ground fixing structure through anchoring devices or oversized devices and then with very high installation and management costs or which, in case of critical sea conditions, cannot guarantee the required stability.

Another important drawback is then identified by the high costs of the anchoring devices and often by the difficulty in identifying the correct anchoring and then the device to be used.

In this situation the technical task underlying the present invention is to devise an anchoring device capable of substantially obviating at least partially the mentioned drawbacks.

Within said technical task an important object of the invention is to obtain an anchoring device allowing to have a safe anchoring regardless of sea/wind conditions.

Another important object of the invention is to implement an anchoring device which makes simple and easy to perform a safe and stable anchoring.

A not secondary object of the invention is to implement an anchoring device with reduced costs and quick use.

The technical task and the specified objects are achieved by an anchoring device as claimed in the enclosed claim 1. Examples of preferred embodiment are described in the depending claims.

The features and the advantages of the invention are explained hereinafter by the detailed description of preferred embodiments of the invention, with reference to the enclosed drawings, wherein:
**Figure 1** shows an anchoring device according to the invention;
**Figure 2** illustrates a detail of Figure 1;
**Figure 3** shows another anchoring device according to the invention;
**Figure 4** has, in scale, a set of the anchoring device; and
**Figure 5** is a schematic view of the anchoring device.

In the present document, the measurements, values, shapes and geometrical references (such as perpendicularity and parallelism), when associated to words such as "about" or other similar terms such as "approximately" or "substantially", are to be meant as excluding measurement errors or inaccuracies due to production and/or manufacturing errors and, above all, excluding a slight deviation from the value, measurement, shape or geometrical reference thereto it is associated. For example, such terms, if associated to a value, preferably designate a deviation not higher than 10% of the value itself.

Moreover, when used, terms such as "first", "second", "higher", "lower", "main" and "secondary" do not identify necessarily an order, a relation priority or relative position, but they can be simply used to distinguish more clearly components different from each other.

Unless otherwise designated, "perpendicular", "transversal", "parallel" or "normal" or other terms of geometric positioning between geometric elements (for example axes, directions and straight lines) are to be meant with reference to their mutual geometric position between the corresponding projections. Said projections are defined on one single plane parallel to the one(s) in which said geometric elements lie.

The measurements and data reported in the present text are to be considered, unless otherwise indicated, as performed under International Standard Atmosphere ICAO (ISO 2533:1975).

Unless otherwise specified, as it results from the following discussions, it is considered that terms such as "treatment", "computer science", "determination", "calculation", or the like, relate to the action and/or processes of a computer or similar electronic calculation device which manipulates and/or transforms data represented as physical data, such as electronic quantities of registers of a computer system and/or memories into other data similarly represented as physical quantities within computer systems, registers or other devices for storing, transmitting or displaying information.

With reference to the Figures, the anchoring device according to the invention is designated as a whole with number **1.**

It is configured to constrain a floating body **1a** to the ground and in particular to a ground fixing structure **1b** (for example identifiable in a sea portion or a port) by allowing a mutual motion between floating body 1a and ground fixing structure. The floating body 1a can be identified in un vessel, a ship a boat, a floating dock and/or a floating platform.

It can include a geolocation system configured to know the geographical position of the body 1a.

The floating body 1a can define a barycentric longitudinal axis **1e.**

The anchoring device 1 can include at least a floating body 1a.

Suitably, it can include several floating bodies 1a and in particular a plurality of vessels, boats, ships. Alternatively, it comprises one single floating body 1a and in detail one single platform.

The ground fixing structure 1b can be identified from the seabed or the quay of a port. It can include one or more from buoys, dead bodies, bitts and catenaries or other means to allow anchoring the body 1a.

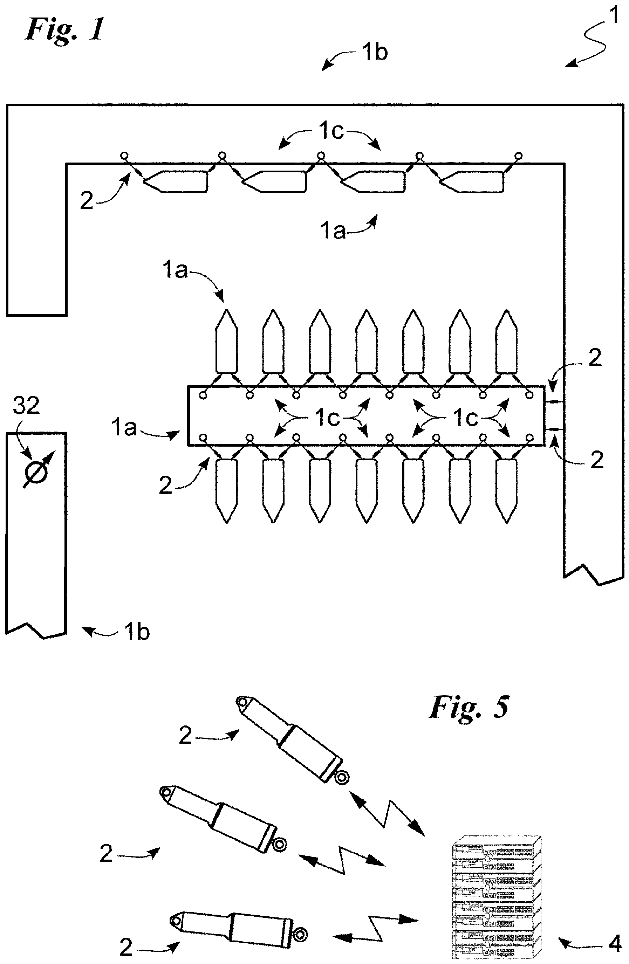

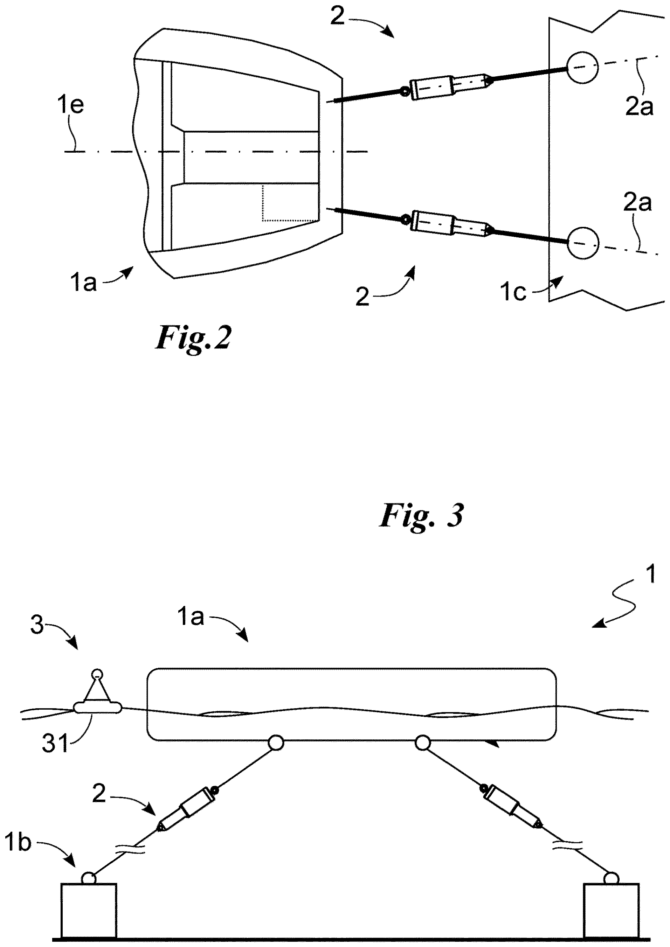

In particular, in case of floating body 1a identifiable in a vessel, a ship or a boat, the ground fixing structure 1b, as shown in Figures 1-2, can include one or more berths 1c and in particular be identifiable in a port (that is a natural or artificial structure placed on the maritime coast or on the shore of a lake or stream, suitable to allow landing and mooring (that is anchoring) to vessels, boats and ships).

Said port and then said structure 1b can include one or more quays 1d. Preferably at least a quay 1d and in detail all quays 1d comprise at least a berth 1c. The device 1 can include at least a ground fixing structure 1b.

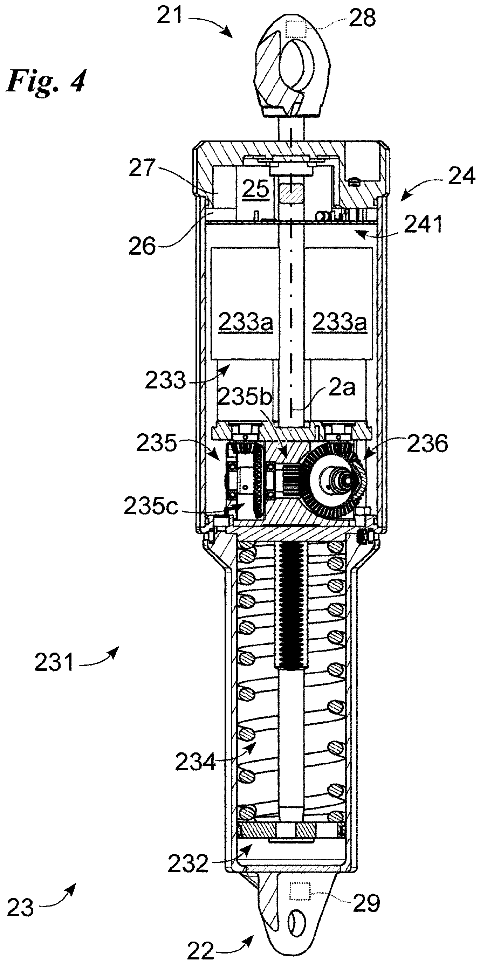

The anchoring device 1 preferably comprises at least a constraint apparatus 2 (shown in Figure 4) configured to constrain a floating body 1a to a ground fixing structure 1b preferably by allowing a mutual motion between body 1a and structure 1b at least along a motion axis **2a.**

It is highlighted that the constraint apparatus 2 is configured to constrain a body 1a to a structure 1b directly and/or indirectly.

In case of direct constraint, the constraint apparatus 2 is configured to constrain a floating body 1a to a ground fixing structure 1b. For example the constraint apparatus 2 can constrain a boat to a quay (in particular to a buoy of the quay) or a floating platform to the seabed.

In case of indirect constrain the constraint apparatus 2 is configured to constrain a floating body 1a to a second floating body 1a (identifiable usually in a floating dock) which in turn can be constrained (directly or indirectly) to the ground fixing structure 1b preferably by another constraint apparatus 2.

The constraint apparatus 2 can include a first attachment **21** configured to be constrained, preferably in a fixable way, to the floating body 1a and a second attachment **22** configured to be constrained, preferably in a fixable way, to the ground fixing structure 1b.

The first attachment 21 is configured to be constrained to the floating body 1a directly and suitably integrally. Alternatively, it is configured to be constrained to the floating body 1a indirectly and then the constraint apparatus 2 can include first connection means between first attachment 21 and floating body 1a such as ropes, chains, metal cables, rods, shackles.

The second attachment 22 is configured to be constrained to the ground fixing structure 1b directly and suitably integrally. Alternatively, it is configured to be constrained indirectly and then the constraint apparatus 2 can include second connection means between second attachment 22 and structure 1b such as ropes, chains, metal cables, rods, shackles.

The attachments 21 and 22 are configured to define a mutual, preferably oscillatory, motion thereof, at least along the motion axis 2a suitably as a function of the mutual motion between floating body 1a and ground fixing structure 1b.

Said mutual motion between the attachments 21 and 22 and then between body 1a and structure 1b can be damped and then the constraint apparatus 2 can include a shock absorber **23** of the mutual motion between the attachments 21 and 22 and then of the mutual motion between body 1a and structure 1b.

The shock absorber 23 constraints therebetween, directly or indirectly, the attachments 21 and 22 by allowing said mutual motion between the attachments 21 and 22 at least along a motion axis 2a preferably as a function of a wave incident on said floating body 1a and/or of the wind incident on said floating body 1a.

The shock absorber 23 can include a sliding chamber **231** defining the motion axis 2a; a piston **232** configured to slide, along said axis 2a, in said sliding chamber 231 as a function of the mutual motion between the attachments 21 and 22; and a damper **233** configured to dampen the sliding of the piston 232 in the sliding chamber 231 and then the motion between the attachments 21 and 22.

The piston 232 is integral to one of the attachments 21 or 22 in detail to the first attachment 21.

The sliding chamber 231 is integral to an attachment 21 or 22 distinct from that of the piston 232 and preferably to the second attachment 11.

The chamber 231 can define a watertight internal volume. The piston 231 provides the head inside the internal volume and the stem protruding partially therefrom through a hole equipped with sealing means.

The sliding of the piston 232 and then its position with respect to the chamber 231 defines for the shock absorber 23 a contracted configuration wherein the distance between the attachments 21 and 22 is minimum and an expanded configuration wherein the distance between the attachments 21 and 22 is maximum.

Suitably, the shock absorber 23 can include elastic means **234** configured to work in opposition to a distance variation between the attachments 21 and 22 and in particular to a passage from the contracted configuration to the expanded one. The shock absorber 23 can include at least a kinematism **235** for the kinematic connection between piston 232 and damper 233.

The kinematism 235 can be identified in a gear suitable to transform the rectilinear motion of the piston 42 into a rotary motion to the shock absorber 23 with preferably fixed transmission ratio. It can include a rack **235a** developing along the motion axis 2a, and a toothed wheel **235b** suitable to slide along the rack 235a.

The rack 235a can be integral to the piston 232.

It is highlighted that it is obvious for a person skilled in the art to replace the rack with an endless screw or a ball screw.

The toothed wheel 235b can be integral to the sliding chamber 231 and it can be controlled in rotation by the rack 235a.

The shock absorber 23 can include at least a multiplier **236** of the speed outgoing from the kinematism 235 and in detail from the toothed wheel 235b by allowing to go from low speeds, typical of a wave, to a higher speed motion.

The damper 233 can be of electric type. For example, it can include at least a preferably brushless electric motor **233a.** Preferably the damper 233 comprises several motors 233a each one associated to its own kinematism 235 and to its own multiplier 236.

Each electric motor 233a can include a rotor and a stator and be configured to dampen the motion between the attachments 21 and 22 dissipating energy by opposition to a mutual rotation between stator and rotor.

The rotation between rotor and stator and in particular of the rotor with respect to the stator is proportional to the translation of the piston 232 with respect to the sliding chamber 231.

The rotation of the rotor, then, is controlled by the translation of the piston 231 through the kinematism 235 and in particular the multiplier 236. The rotation of the rotor is proportional to the translation of the piston 232.

It appears obvious that the stator is not moved by the piston 232 and then it remains substantially still and it can be integral to the chamber 231.

The damper 233 and then the shock absorber 23 are configured to vary the damping of the apparatus 2 as a function of the mutual motion between the attachments 21 and 22 and in detail of the sliding of the piston 232. More in detail, the damper 233 varies the damping based upon the speed and/or acceleration of the piston 232. More in detail, it varies the damping according to, preferably proportionally, speed and/or acceleration of the piston 232.

It is specified that in this document the expression "based upon" identifies that to a variation and, for example, to an increase in a first parameter (in this case the sliding speed/acceleration of the piston 232) any variation (increase or decrease) in the second parameter (in this case the damping) corresponds; the expression "according to" identifies that to an increase or decrease in a first parameter an increase or a decrease in the second parameter corresponds, respectively.

The damper 233 is configured to vary the damping by modifying the opposition to the mutual motion between the attachments 21 and 22 and in details to the sliding of the piston 232. Preferably it varies the damping by varying the opposition to the rotation between rotor and stator and in detail by modifying magnetic parameters of the poles to the stator and/or rotor. In detail the board 24 introduced below varies the damping by modifying parameters such as polarity, magnetic intensity, electrical load circuit mode.

Optionally the electric motor 233a and then the damper 233 are used to produce energy as a function of the sliding of the piston 232.

The constraint apparatus 2 can include a board **24** for commanding the same apparatus 2 and in particular the shock absorber 23.

Moreover, the board 24 can include at least a sensor **241** for measuring the mutual motion between the attachments 21 and 22 and in detail the sliding of the piston 232 so to allow the board 24 to command said damping variation to the shock absorber 23 and in detail to the damper 233.

In particular, the at least a measuring sensor 241 is configured to detect at least a parameter of the mutual motion between the attachments 21 and 22 such as, for example, sliding speed (in module and suitably direction) and acceleration (in module and suitably direction) of the piston 232. More in particular it is configured to detect speed and acceleration. It is highlighted that as a function of speed and/or acceleration the width of said mutual motion ca be easily detected.

The measuring sensor 241 can be configured to detect the sliding of the piston 232 directly. Then, it can perform a measurement of the sliding of the piston 232 by detecting for example its motion and/or its position (for example a position variation) along the motion axis 2a, the rotation of the toothed wheel 235b, a variation in the distance between head of the piston 232 and a base of the sliding chamber 231 and/or a detection of the operating parameters of the damping means 233 such as the rotation speed of the rotor of the motor 233a.

The constraint apparatus 2 can include at least a converter **25** of electric energy. The converter 25 is configured to vary the parameters of the electricity outgoing from the shock absorber 23, in detail from the damper 233, by allowing for example the use thereof to an external apparatus and/or to the same apparatus 2.

The at least a converter 25 is available in said chamber 231.

The constraint apparatus 2 can include at least a battery **26** for storing the energy outgoing from the converter 25 and/or from the shock absorber 23.

The battery 26 is available in said chamber 231.

The constraint apparatus 2 can include a first data connector **27** configured to place the apparatus 2 and in particular the board 24 in data connection with a control unit outside the apparatus 2 and inserted below.

Said data connection are preferably wireless such as the known WI-FI^{®} and Bluetooth^{®}.

The first data connector 27 is in data connection with the board 24.

The constraint apparatus 2 can include a tracker configured to detect at least the tilting of the motion axis 2a.

In particular, the tracker is configured to define the position in space of the motion axis 2a. Then, it is configured both to detect the tilting of the axis 2a with respect to the gravitational gradient (that is to perform the inclinometer function) and to orient said motion axis 2a suitably with respect to the cardinal points (analogously to a compass).

To this purpose it can comprise at least a first sensor **28** placed at the first attachment 21 and a second sensor **29** placed at the second attachment 22.

The first sensor 28 is configured to know the position of the first attachment 21 and the second sensor 29 is configured to know the position of the second attachment 22 so as to allow to know the position of the motion axis 2a as a function of the position of the two attachments 21 and 22.

Each one of said at least a first sensor 28 and of said at least a second sensor 29 can include an inertial and/or geolocation sensor.

The tracker, if present, is in data connection with the board 24.

The anchoring device 1 can include a member **3** for detecting and then measuring a wave.

The detection member 3 can be configured to perform a direct or indirect detection of the wave.

In case of direct detection, the member 3 detects at least a direct (that is its own) parameter of the wave such as, for example, frequency and/or height of the wave in one or more spots. It can include at least a wave buoy **31,** that is a buoy configured to detect and then to measure a wave and in detail said direct parameter.

The wave buoy 31 can be arranged in the structure 1b near the floating body 1a and for example inside the port.

It can include a detector of the geographical position of the same buoy. The wave buoy 31 can be of known type.

In case of indirect detection the member 3 can detect the wave as a function of an indirect parameter of the wave and then deriving from the wave action. For example, the indirect parameter can be a parameter of the mutual motion between the attachments 21 and 22 (for example width, speed and/or acceleration of said motion) and then of the sliding of the piston 232 given by the wave action on the floating body 1a. It can be in data connection with the board 24 and in detail with the measuring sensor 241.

Alternatively or additionally, the indirect detection can be performed by the detection member 3 as a function of an indirect parameter therefrom the wave derives/emerges. For example, said indirect parameter can be function of the wind and the detection member can include an anemometer **32** for measuring the wind and in detail the speed and direction of the wind.

As further alternative or additionally, the indirect detection can be performed as a function of an indirect parameter linked to the motion of the floating body 1a. The detection member 3 thus can comprise an inertial measurer **33** of the floating body. The inertial measurer 33 is configured to detect a motion of the floating body 1a and in particular acceleration (suitably direction, module and way) and/or speed (suitably direction, module and way). It can include one or more inertial sensors such as accelerometer and/or gyroscope.

It is highlighted that the detection member 3 detects for each parameter at least a value and preferably a sequence of values.

The anchoring device 1 can include one or more databases as described below. As it is known, the database is substantially a data bank, that is a collection of organized data, which is stored and is made accessible electronically.

In detail the anchoring device 1 can include an anchoring database associating to each floating body 1a one or more physical-mechanical features of the floating body and suitably a first identifier of the floating body 1a.

In particular, the anchoring database associates to each device the physical-mechanical features required to define its response and, precisely, its motions when subjected to an external force and preferably a wave. Said physical-mechanical features can include one or more and in particular the totality: shape, inertia and weight of the floating body 1a.

The first identifier can be an alphanumeric code. It is univocal for each body 1a.

Additionally the anchoring database associates to each floating body 1a the one or more constraint apparatuses 2 engaged thereto. In particular, for each apparatus 2 engaged to a body 1b the anchoring database associates to a first identifier a second identifier of the constraint apparatus 2 and the position of the motion axis 2a of the apparatus 2.

The second identifier can be an alphanumeric code. It is univocal for each constraint apparatus 2.

The anchoring device 1 can include a map.

Said map comprises a nautical representation of at least the ground fixing structure 1b, that is a representation of geographical information such as those usually supporting the navigation. Optionally it comprises a nautical representation of the structure 1b and preferably of at least an area adjacent to said structure 1b. For example, in case of structure 1b identifiable in a nautical chart of a port and then to outline contours and geographical features of the port and of other elements adjacent thereto such as costs, mountains and islands.

The nautical representation can include a mapping of the seabed at the ground fixing structure 1b so as to allow the device 1 to know one or more features of each point of the seabed near the floating body 1a when anchored. For example, said nautical representation can define the depth of each point of the seabed of the port.

Said map can include for each berth 1c of the ground fixing structure 1b a third identifier of said berth 1c.

The third identifier can be an alphanumeric code. It is univocal for each berth 1c.

In particular, the map associates to each third identifier, that is to each berth 1c, the geographical arrangement of the berth 1c in said nautical representation. For example, the map can include the arrangement of one or more quays 1d and then the arrangement of said berths 1c along said quays 1d; additionally or alternatively, it can include the arrangement of one or more floating bodies 1a and in particular of one or more floating piers and then the arrangement of said berths 1c along said floating piers.

Preferably, the map associates to each third identifier the mooring position, that is to each berth 1c, the position of the floating body 1a (in detail of the vessel, boat or ship) taken moored/anchored thereat. Said mooring position then defines the position of the the barycentric longitudinal axis 1e of the floating body 1a.

Additionally the anchoring database can associate to each floating body 1a a third identifier and/or said mooring position.

The anchoring device 1 can include a wave database associating to each wave the function of propagating said floating wave and suitably a fourth identifier of the wave. The fourth identifier can be an alphanumeric code. It is univocal for each wave. The propagating function describes the motion of the wave in the structure 1b until its substantial dissipation and comprises also possible one or more reflected waves deriving from said wave. It represents the way in which the wave propagates in water and defines the variation thereof over time of one or more features. Preferably the propagating function describes one or more and in particular the totality of: height taken by a wave in the several points (suitably of at least the structure 4), the propagating direction/s, distance between crests, frequency.

Preferably, the propagating function defines the course of at least one or more parameters detected by the member 3 that is the course of their values. Consequently, in case of buoy 31 the function describes at least height and/or frequency of the wave at the buoy location point; in case of anemometer 32 the function describes the course, apart from the wave features, of wind speed and/or direction.

The wave database can associate to a wave the wave duration, that is the time required to the wave to dissipate and then substantially to disappear.

The wave database can associate to a wave (that is to each fourth identifier), one or more constraint apparatuses 2 (that is one or more second identifiers). In particular, it associates to a wave the mutual motion between the attachments 21 and 22, that is the distance variation between two attachments 21 and 22. More in particular it associates to a wave at least a parameter of the mutual motion between the attachments 21 and 22 of a constraint apparatus 2 suitably associated in said anchoring database to a floating body 1a and a position of the motion axis 2a. Alternatively or additionally, the wave database can associate to a wave a wind and in detail wind speed and direction.

As further alternative or addition, the wave database can associate to a wave a motion of the floating body 1a and in particular module, speed and/or acceleration of the body 1a.

The anchoring device 1 can include a control unit **4** in data connection with said constraint apparatus 2 and with said databases.

The control unit 4 can include a second data connector configured to define a, preferably wireless, data connection between unit 4 and external element.

In detail the second data connector, by exploiting said first data connector 27, can put said unit 4 and said card 24 in data connection.

The second data connector can define a data connection with the body 1a and in particular with the geolocation system so as to allow the unit 4 to know the geographical position of the body 1a.

The second data connector can define a data connection between detection apparatus 3 and unit 4.

The control unit 4 can include means for filing at least said databases and preferably said map.

As described in details hereinafter, the control unit is configured to identify, in the wave database, said propagating function according to the extent of the mutual motion and then to command to each constraint apparatus 2 associated to the floating body 1a a variation in damping the shock absorber 23 as a function of said just detected propagating function, of the physical-mechanical features of the floating body 1a and of the position of the motion axis 2a of the constraint apparatus 2.

The control unit 4 is any processor capable of processing input data, of preferably digital type, to generate specific data as output. It can include an input and/or output interface. It can include a neural network.

The operation of the anchoring device 1, previously described in structural terms, introduces a new anchoring process.

The anchoring process can include a phase of mooring one or more floating bodies 1a.

In the mooring phase a floating body 1a is moored and then constrained to a ground fixing structure 1b through one or more constraint apparatuses 2.

In particular, in the phase of mooring a floating body 1a identifiable in a platform, the platform is constrained to the seabed by a plurality of constraint apparatuses 2. Alternatively, in the phase of mooring a floating body 1a identifiable in a ship/boat/vessel, the floating body 1a is constrained by one or more constraint apparatuses 2 to the port suitably at a berth 1c.

In case of floating pier constrained to a quay 1d in the mooring phase the pier, identifying a floating body 1a, is constrained to a quay 1d through at least a constraint apparatus 2.

The anchoring process can include a phase for registering at least the anchoring database.

In the registering phase the control unit 4 associates in the anchoring database to each floating body 1a, that is to each first identifier, each constraint apparatus 2 anchoring the body 1a to the ground fixing structure 1b.

Suitably said association is performed as a function of the relative position between floating body 1a (known to the control unit 4 thanks to the geolocation system) and apparatus 2 (known to the control unit 4 thanks to the tracker). In particular, the unit 4 associates to a floating body 1a one or more constraint apparatuses 2 having distance lower than a minimum distance (for example equal to 1 m). Alternatively, said association in the anchoring database between floating body 1a and one or more constraint apparatuses 2 is performed by an operator through an interface specific to the unit 4.

Optionally, by exploiting the geolocation system, the control unit 4 can associate to each floating body 1a a berth 1c (that is a third identifier) and then the mooring position.

In particular, by exploiting the geolocation system and the map, the unit 4 associates to a floating body 1a the berth 1c at shorter distance from the same body 1a. Alternatively said association between floating body 1a and berth 1c is performed by an operator through interface of the unit 4.

Additionally, in the registering phase the control unit 4 can associate to each constraint apparatus 2 the position of the motion axis 2a of the constraint apparatus 2. In particular, by exploiting the sensors 28 and 29, the board 24 obtains the position of the motion axis 2a which is then sent to the control unit 4 which provides to register it in the anchoring database.

Preferably in the registration phase the unit 4 can associate to each constraint apparatus 2 the position of the axis 2a with respect to the floating body 1a. In particular, the control unit 4 defines the position of the axis 2a with respect to the floating body 1a as a function of the position of the motion axis 2a and of the mooring position.

The anchoring process can include a phase for detecting at least a wave.

The detection phase can be performed subsequently or parallelly to the registration phase.

In the detection phase the detection member 3 detects at least a parameter of the wave. In particular, it detects a value of said at least a parameter and preferably a sequence of values of said at least a parameter.

In a first not limiting example, the member 3 can detect a direct parameter of the wave and preferably height and/or frequence of a wave. Then, it can detect directly a wave by exploiting for example one or more wave buoys.

In a second not limiting example, it can detect an indirect parameter of the wave and for the precision at least a parameter of the mutual motion between the attachments 21 and 22 of at least a constraint apparatus 2 and preferably of several constraint apparatuses 2.

Each parameter of the mutual motion between the attachments 21 and 22 is associated to un constraint apparatus 2 and to a position of the motion axis 2a.

In a third not limiting example, the detection member 3 detects indirectly the wave as a function of the wind and in particular by detecting as indirect parameter wind speed and/or direction suitably thanks to the anemometer 32.

In a fourth not limiting example, the detection member 3 detects indirectly the wave as a function of the motion of the floating body 1a suitably thanks to the inertial measurer 33. It then detects as indirect parameter acceleration (suitably direction, module and way) and/or speed (suitably direction, module and way).

The anchoring process can include a phase for identifying the wave.

In this phase the control unit 4 identifies in the wave database a wave and in particular the propagating function according to at least a parameter detected by the detection member 3.

In particular, in the identification phase the unit 4 defines according to at least a detected parameter and preferably to the sequence of values of the detected parameter a current function describing the course of said parameter; and it searches for in the historical database the sequence of oscillatory motions having variation function nearest (preferably almost equal) to the current function. Preferably it searches for in the wave database by comparing the current function with a (preferably initial) portion of the propagating functions.

According to the first not limiting example, the control unit 4 searches for in the wave database the wave the propagating function thereof is coherent with the direct parameter and in particular height and/or frequency detected by the member 3 and suitably the geographical position of the wave buoy 31.

According to the second not limiting example, the control unit 4 searches for in the wave database the coherent wave with each detected parameter of the mutual motion between the attachments 21 and 22. In particular, it searches for in the wave database the wave associated to one or more constraint apparatuses 2 having both the parameters of said mutual motion equal to the detected ones and the same position of the motion axis 2a.

According to the third not limiting example, the control unit 4 searches for in the wave database the wave associated to the wind according to the detected wind and in particular having substantially equal wind speed and/or direction.

According to the fourth not limiting example, the control unit 4 searches for in the wave database the wave associated to the motion of the floating body 1a and in particular having substantially equal module, speed and/or acceleration of the body 1a.

It is highlighted that in case there is no perfect correspondence between what detected by the member 3 and the wave database, the control unit 4 identifies the wave nearest to what detected, that is the one which, with respect to the other ones, has the values associated thereto with minimum difference with respect to one or more parameters detected by the member 3.

It is highlighted that two or the totality of said three examples can be freely implemented so as to improve the identification of the wave and then of the propagating function.

Once completed the identification phase and then identified the associated propagating function, the anchoring process comprises a phase for commanding the one or more constraint apparatuses 2.

In the command phase the control unit 4 commands to each constraint apparatus 2 associated to the one or more floating bodies 1a a variation in the damping of the shock absorber 23 as a function of the propagating function associated to the detected wave, of the physical-mechanical features of the floating body 1a thereto the apparatus 2 is associated and of the position of the motion axis 2a of said constraint apparatus 2.

Preferably the control unit 4 commands a variation in the damping of the shock absorber 23 as a function of the detected propagating function subsequent to the current function describing the course of at least a detected parameter.

Said physical-mechanical features and said position of the axis 2a can be derived from the mooring database.

In the command phase the control unit 4 commands to one or more of the constraint apparatuses 2 a damping directly proportional to the height of the wave and inversely proportional to the divergence angle between motion axis 2a and wave advance direction (that is maximum damping to the one or more constraint apparatuses 2 with motion axis 2a parallel to the wave advance direction). Moreover, in the command phase the control unit 4 commands each constraint apparatus 2 by imposing to each constraint apparatus 2 a damping as function of the berth 1c and in particular of the position of the berth 1c, that is of its location on the map. In detail it commands a damping as function of the position of the berth 1c and of the propagating direction and preferably of the number of berths 1c occupied upstream according to the propagating direction.

In some cases the control unit 4 commands to each constraint apparatus 2 a damping as function of the position of mooring and in particular of the barycentric longitudinal axis 1e of the floating body 1a with respect to the wave propagating direction.

Preferably, the control unit 4 commands to each constraint apparatus 2 a damping as function of the tilts between barycentric longitudinal axis 1e, wave propagating direction and motion axis 2a.

The command phase can define an implementation period at least equal to the duration associated to the wave in the wave database. During said implementation period the control unit 4 can vary the damping of each apparatus according to the function.

In order to make clearer the command phase the following brief example is given. In the detection phase, the detection member 3 detects a wind of 5 nodes coming from North. By virtue of these parameters the control unit 4 identifies in the wave database a wave having a propagating function which is characterized by waves having height of one meter advancing from North to South. The unit 4 then commands to the apparatuses 2 having motion axis 2a parallel to the North-South direction a greater damping than the one of the apparatuses 2 having axis 2a divergent from the North-South direction. Moreover, the unit 4 commands to the one or more constraint apparatuses 2 associated to the upwind floating body 1a, that is located further north than the others, a greater damping than the other downwind floating bodies 1a with respect to said upwind floating body 1a.

The process can include at least a checking phase wherein the detection member 3 detects a second wave, the unit identifies in the wave database a second propagating function of said second wave and then checks if the second propagating function is equal to the one detected in the preceding identification phase.

If the second function is different from the preceding one, the process provides a new phase of commanding the one or more constraint apparatuses 2 according to said second function and then sets their damping according to said second function. Otherwise the unit 4 continues to command to the shock absorbers damping according to function detected previously.

The checking phase can be performed parallelly to the command one.

The anchoring device 1 and then the anchoring process according to the invention allow important advantages.

In fact, they allow, in a simple, economic and quick way, to have a safe anchoring indifferently from the sea/wind conditions.

An important advantage is given by the fact that the anchoring device 1 and then the anchoring process can perform a predictive analysis of the wave, that is it can determine which features of the wave will affect a floating body and then adjust in advance the dampers 23.

Such aspect results to be emphasized above all in case of wind evaluation which, thanks to the map, allows to identify for example a possible cross wind and then to adjust suitably the dampers 23. Moreover, the identification of the wind and the use of the map allow to identify conditions such as those of long fetch and then to identify in advance the arrival of waves.

Another advantage is given by the possibility of adjusting independently therebetween and continuously the damping value of the various constraint apparatuses 2 by allowing then to optimize the energy production by the same apparatuses 2.

The invention may be subject to variants within the scope of the inventive concept defined by the claims. Within such scope, all details can be replaced by equivalent elements and the materials, shapes and sizes can be any.

## Claims

1. A device (1) for anchoring at least a floating body (1a) comprising;
- for each said floating body (1a) at least a constraint apparatus (2) configured to constrain said floating body (1a) to a ground fixing structure (1b) and comprising
∘ a first attachment (21) configured to be constrained to said floating body (1a);
∘ a second attachment (22) configured to be constrained to said ground fixing structure (1b);
∘ said attachments (21, 22) being configured to define a mutual motion thereof at least along a motion axis (2a);
**characterized in that** said constraint apparatus (2) comprises
- a shock absorber (23) constraining said first attachment (21) to said second attachment (22) by allowing a mutual motion between said attachments (21, 22) at least along said motion axis (2a) as a function of a wave incident on said floating body (1a) and configured to control a variation in the damping of said shock absorber (23) as a function of said mutual motion between said attachments (21, 22);
and **characterized in that** said anchoring device (1) comprises
- a member (3) for detecting a wave;
- an anchoring database associating to each one of said at least a floating body (1a)
∘ the physical-mechanical features of said floating body (1a),
∘ at least a constraint apparatus (2) and
∘ the position of said motion axis (2a) of said constraint apparatus (2);
- a wave database associating to each wave the function of propagating said wave;
- a control unit (4) in data connection with said constraint apparatus (2), said detection member (3) and with said database; said control unit (4) being configured
∘ to identify in said wave database said propagating function according to said detection member (3) and
∘ to command to each one of said at least a constraint apparatus (2) associated to said floating body (2) a variation in said damping of said shock absorber (23) as a function of said propagating function, of said physical-mechanical features of said floating body (1a) and of said position of said motion axis (2a) of said constraint apparatus (2).

2. The anchoring device (1) according to claim 1, wherein said constraint apparatus (2) comprises at least a first sensor (28) configured to know the position of said first attachment (21) and a second placed sensor (29) configured to know the position of said second attachment (22) so as to allow to know the position of said motion axis (2a) as a function of the position of said attachments (21, 22).

3. The anchoring device (1) according to at least a preceding claim, wherein said detection member (3) comprises at least a wave buoy (31)

4. The anchoring device (1) according to at least a preceding claim, wherein said detection member (3) comprises at least an anemometer (32) for measuring the wind speed and direction; wherein said wave database associates to each wave said speed and said direction of said wind; and wherein said control unit (4) identifies in said wave database said wave and then said propagating function according to said speed and said direction of said wind detected by said detection member (3).

5. The anchoring device (1) according to at least a preceding claim, wherein said control unit (4) comprises a sensor (241) for measuring said mutual motion between said attachments (21, 22); and wherein said detection member (3) is in data connection with said measuring sensor (241) so as to detect said wave as a function of said mutual motion between said attachments (21, 22).

6. A process for anchoring at least a floating body (1a) comprising;
- for each one of said floating body (1a) at least a constraint apparatus (2) configured to constrain said floating body (1a) to a ground fixing structure (1b) and comprising
∘ a first attachment (21) configured to be constrained to said floating body (1a);
∘ a second attachment (22) configured to be constrained to said ground fixing structure (1b);
∘ said attachments (21, 22) being configured to define a mutual motion thereof at least along a motion axis (2a);
**characterized in that** said constraint apparatus (2) comprises
- a shock absorber (23) constraining said first attachment (21) to said second attachment (22) by allowing a mutual motion between said attachments (21, 22) at least along said motion axis (2a) as a function of a wave incident on said floating body (1a) and configured to control a variation in the damping of said shock absorber (23) as a function of said mutual motion between said attachments (21, 22);
and **characterized in that** said anchoring process comprises
- an anchoring database associating to each one of said at least a floating body (1a)
∘ the physical-mechanical features of said floating body (1a),
∘ at least a constraint apparatus (2) and
∘ the position of said motion axis (2a) of said constraint apparatus (2);
- a wave database associating to each wave the propagating function of said wave;
- a detection phase wherein the detection of at least a wave is performed
- a detection phase in said wave database of said propagating function according to said detection and
- a phase for commanding to each one of said at least a constraint apparatus (2) associated to said floating body (2) a variation in said damping of said shock absorber (23) as a function of said propagating function, of said physical-mechanical features of said floating body (1a) and of said position of said motion axis (2a) of said constraint apparatus (2).
